## Europäisches Patentamt
## European Patent Office
## Office européen des brevets

(11) Veröffentlichungsnummer: **0 159 607 B1**

# EUROPÄISCHE PATENTSCHRIFT

(45) Veröffentlichungstag der Patentschrift: 27.03.91

(51) Int. Cl.⁵: **C05G 1/00**

(21) Anmeldenummer: 85104210.1

(22) Anmeldetag: 06.04.85

(54) Düngemittel zur Entgiftung von insbesondere durch saure Niederschläge geschädigten Böden und ein Verfahren zur Düngung, Entgiftung und Entsäuerung von Böden.

(30) Priorität: 26.04.84 AT 1393/84

(43) Veröffentlichungstag der Anmeldung:
30.10.85 Patentblatt 85/44

(45) Bekanntmachung des Hinweises auf die
Patenterteilung:
27.03.91 Patentblatt 91/13

(84) Benannte Vertragsstaaten:
AT BE CH DE FR GB IT LI LU NL SE

(56) Entgegenhaltungen:
DE-A- 1 592 804
GB-A- 1 023 265
US-A- 3 791 810

CHEMICAL ABSTRACTS, Band 67, Nr. 13,
1967, Seite 5939, Zusammenfassung Nr.
63388m, Columbus, Ohio, US; A.I. SOKLAKOV
et al.: "Potassium metaphosphate", & ISS-
LED. KHIM. TEKHNOL. UDOBR., PESTITS., SO-
LEI, AKAD. NAUK SSSR, OTD. BIOKHIM. BIO-
FIZ. KHIM. FIZIOL. AKTIV. SOEDIN. 1966,
157-69

CHEMICAL ABSTRACTS, Band 80, Nr. 7, 18.
Februar 1974, Seite 233, Zusammenfassung

Nr. 36301q, Columbus, Ohio, US; SU-A-386
880

(73) Patentinhaber: Lang & Co., chemisch-
technische Produkte Kommanditgesellschaft
Herzog Friedrichplatz 1
A-3001 Mauerbach/Wien(AT)

(72) Erfinder: Kaes, Gertrude, Dipl.-Ing.
Kohlmarkt 1
A-1010 Wien(AT)

(74) Vertreter: Puchberger, Peter, Dipl.-Ing. et al
Patentanwälte Dipl.-Ing. Georg Puchberger
Dipl.-Ing. Rolf Puchberger Dipl.-Ing. Peter
Puchberger Singerstrasse 13
A-1010 Wien(AT)

**Beschreibung**

Die Erfindung betrifft ein Mittel zur Bindung von Säuren, Aluminium und Schwermetallen in insbesondere durch saure Niederschläge geschädigten Böden und gegebenenfalls zu deren Düngung, wobei das Mittel alkalisch reagierende Calzium- und/oder Magnesium- und/oder Kalium- bzw. Natriumverbindungen und/oder Ammoniumverbindungen enthält, und das Mittel wasserlösliche Pyrophosphate ( = Diphosphate) oder andere Polyphosphate, welche wasserunlösliche Aluminium- und Schwermetallsalze bilden, und gegebenenfalls weitere Nährstoffe enthält. Weiters betrifft die Erfindung ein Verfahren zur Bindung von Säuren, Aluminium und Schwermetallen in Böden unter Verwendung des erfindungsgemäßen Mittels.

Die Verunreinigungen von Niederschlägen, welche auf den Boden niedergehen, durch saure Komponenten sind seit langem bekannt. Diese sauren Komponenten treten in der Atmosphäre in verschiedenen Formen auf, vor allem als säurebildende Gase, wie Schwefel- und Stickstoffoxide, aber auch als freie Säuren, wie Salzsäure, Schwefelsäure oder Salpetersäure und Fluorwasserstoff. Die Niederschläge gelangen auf den Boden durch Ablagerung in gasförmiger und partikelförmiger Form bzw. mit Regen oder Schneefall vermischt als nasser Niederschlag, wobei für letzteren schon 1872 von Smith der Begriff "acid rain" = "saurer Regen" geprägt wurde. Die Messungen solcher Emissionen zeigten eine in vielen Gebieten bedrohliche Zunahme der Acidität solcher Niederschläge, welche zur Versäuerung von Böden führt. Der hauptsächliche Ursprung saurer Niederschläge liegt im Schwefeldioxid ($SO_2$) und in Stickstoffoxiden ($NO_x$-Verbindungen), die sich bei der kalorischen Umsetzung von gasförmigen, flüssigen und festen Brennstoffen mit Luft bilden, zum geringeren Teil auch bei Verhüttung von Erzen, verschiedenen chemischen Prozessen und Abfallbeseitigung. Im Nordosten der USA wurden die Säurebildner zu 65 % den schwefelhaltigen, zu 30 % den stickstoffhaltigen Säuren und zu 5 % der Salzsäure zugeordnet. Dieses Verhältnis verschiebt sich allerdings immer mehr zu den stickstoffhaltigen Säuren, da Emissionsbeschränkungen bei der Verbrennung schwefelhaltiger Brennstoffe die $SO_2$-Emissionen stabilisieren bzw. reduzieren.

Typische in Europa gemessene pH-Werte zeigen für Regen 3,8 - 4,8, Rauhreif in der Stadt 3,2, Nebelniederschlag in der Nähe von Industriezentren 3,0. Wenn reines Wasser mit dem durchschnittlichen Kohlendioxidgehalt der Luft von 0,03 % im Gleichgewicht steht, ergibt dies einen pH-Wert von 5,6. Es zeigen obige Werte daher eine starke anderweitige Versäuerung der Niederschläge, welche direkte und indirekte Wirkungen auf die Vegetation ausüben. So wurde in einigen Gebieten Zentraleuropas ein pH-Wert des Bodens von 4,3 und im nordöstlichen Teil Nordamerikas ein solcher von 4,1 gemessen.

Als direkte Wirkung der Versäuerung tritt eine Ab- und Auswaschung von Nährelementen ein, sowie auch eine mögliche Schädigung oberflächlichen Pflanzengewebes. Dies geht in erster Linie auf den Einfluß von Schwefeldioxid, Stickoxiden und gasförmigen Fluorverbindungen zurück. Besonders empfindlich gegen solche Emissionen sind die Fichten und Tannen, bedingt durch die Langlebigkeit ihrer Nadeln, geringes Regenerationsvermögen und starke Filterwirkung im Kronenbereich. Unter Fichtenbeständen konnte nachgewiesen werden, daß saurer Regen am Boden mit niedrigerem pH-Wert, also saurer, ankommt als auf freiem Felde (Auswaschen der bereits trocken deponierten Säurebildner).

Die hohe Wasserstoffionen-Konzentration kann neben Gewebeschädigungen auch oberflächlich deponierte Schwermetalle mobilisieren, welche Pflanzen schädigen. Bei Becken- und Tallagen wird in etwa 600 bis 800 Meter über der Talsohle durch die Sonneneinstrahlung unter Beteiligung des $NO_x$ Photooxidation (wie Ozon, Peroxyacylnitrat) hervorgerufen, welche ab ca. 0,00005 mg $SO_2/m^3$ Luft die Pflanzen noch stärker schädigen als $NO_x$ und $SO_2$ allein.

Als indirekte Wirkung auf den Boden vermögen saure Niederschläge Calzium, Magnesium und Kalium auszuwaschen und solche Nährelemente dem Boden zu entziehen. Gleichzeitig werden toxische Elemente (Schwermetalle) und Aluminium mobilisiert, wodurch Wurzelschäden auftreten. Der niedrigere pH-Wert der Böden und die höhere Konzentration an Schwermetallionen beeinflussen negativ das Wachstum und die Aktivität der notwendigen Bodenorganismen.

Die Schäden dieser sauren Niederschläge zeigten sich infolge der Akkumulationswirkung vor allem im sogenannten Waldsterben, in neuerer Zeit jedoch auch durch Reduktion des Wurzelwachstums bei Gemüsepflanzen, wie Tomaten, und auch durch Schäden bei anderen Pflanzen, wie Gerste.

Die US-A-3 791 810 und GB-A-1 023 265 zeigen Düngemittel, die wasserlösliche Polyphosphate und alkalisch reagierende Stoffe enthalten. Die Aufgabe der Entgiftung und Entsäuerung von Böden ist den Druckschriften nicht zu entnehmen, sodaß dadurch auch keinerlei Anregung gegeben wird, die erfindungsgemäßen Mittel und das erfindungsgemäße Verfahren für diesen Zweck einzusetzen. Gleiches gilt auch für Chemical Abstracts, Febr. 1974, Nr. 2630lq.

Betrachtet man die Gewichtsverhältnisse zwischen den Polyphosphaten und alkalisch wirkenden Bestandteilen der bekannten Düngemittel, so sieht man, daß sich diese etwa wie 1:1 verhalten. Das Beispiel der US-A-3 791 810 zeigt z.B. 26,2 % $P_2O_5$ und 21,8 % $K_2O$. In den Beispielen 2 bis 6 dieser Druckschrift ist das Ammoniumpolyphosphat in Mengen vorgesehen, die jene der alkalischen Bestandteile bei weitem übersteigen. Die Verhältnisse $P_2O_5:K_2O$ liegen zwischen 11,6:6,6 und 52,0 :0. Auch die anderen Druckschriften zeigen derartige Gewichtsverhältnisse, wobei das Polyphosphat zumeist in erheblichem Überschuß vorliegt. Dies ist auch verständlich, da es sich um Phosphatdünger handelt, die einen möglichst großen Anteil löslicher und von den Pflanzen aufnehmbarer Phosphate dem Boden zuführen sollen.

Derartige bekannte Zusammensetzungen sind jedoch für den erfindungsgemäßen Zwecke der Bindung von Säuren, Aluminium und Schwermetallen völlig ungeeignet, sodaß die gegenständliche Erfindung auch nicht nahegeliegt werden kann.

Es ist eine Voraussetzung zur entprechenden Entgiftung, daß die sauren Bestandteile im Boden neutralisiert und sodann durch einen Überschuß an mehrwertigen Kationen - insbesondere Calcium und Magnesium - die giftigen Schwermetalle und das Aluminium völlig wasserunlöslich gebunden werden.

Der dazu nötige Mindestgehalt basischer Calcium-Magnesiumverbindungen und Polyphoshat ist dem Stand der Technik zweifellos nicht zu entnehmen. Die Lehre des Standes der Technik für in die entgegengesetzte Richtung und damit von der Erfindung fort. Ein Überschuß an Pyrophosphat, wie dies die Literatur lehrt, wirkt dem erfindungsgemäßen Zweck entgegen, sodaß die Erfindung durch die Literatur nicht vorweggenommen ist.

Aufgabe der Erfindung ist es, die im Boden insbesondere durch saure Niederschläge hervorgerufenen Auswaschungen von vor allem Calciumverbindungen mit Pufferwirkung neben Kalium- und Magnesiumverbindungen zu kompensieren und in wasserlösliche Form gebrachte Schwermetall- und Aluminiumverbindungen zu inaktivieren, d.h. für Pflanzen und Grundwasser ungiftig zu machen und die Aktivität der notwendigen Bodenorganismen wieder zu ermöglichen.

Die Erfindung ist in erster Linie dadurch gekennzeichnet, daß das Gewichtsverhältnis der alkalisch reagierenden Verbindungen zum Pyrophosphat oder den Polyphosphaten wenigstens 57:13 ist. Das erfindungsgemäße Verfahren ist dadurch gekennzeichnet, daß auf den Boden zumindest eine alkalisch reagierende Calcium- und/oder Magnesium- und/oder Kalium-bzw. Natriumverbindung und/oder Ammoniumverbindung und zumindest ein wasserlösliches Pyrophosphat, insbesondere Kaliumpyrophosphat und/oder Polyphosphat, welches wasserunlösliche Aluminium- oder Schwermetallsalze bildet, sowie gegebenenfalls weitere Nährstoffe aufgetragen werden, wobei das Gewichtsverhältnis der alkalisch reagierenden Verbindungen zum Pyrophosphat oder den Polyphosphaten wenigstens 57:13 ist.

Gemäß Erfindung wird einerseits eine Düngung mittels alkalisch reagierender und Säuren neutralisierender Calciumverbindungen vorgenommen. Vorzugsweise findet dazu Calziumkarbonat und/oder Calziumoxid/-hydroxid Verwendung. Diese Calziumverbindungen können auch ganz oder teilweise, je nach Beschaffenheit und Bedarf der Böden, durch analoge Magnesiumverbindungen ersetzt werden. In der Praxis kommen hiefür vor allem in Betracht:

1. Naturkalke, wie vermahlenes Kalkgestein, kohlensaurer Kalk, vermahlenes kalkhaltiges Pflanzenmaterial, wie Algenkalk; chemisch aufbe reitete umgewandelte Kalke: Branntkalk, Löschkalk, Stückkalk, Mischkalk.

2. Industriekalke, wie Hüttenkalk, Konverterkalk, Rückstandskalke.

3. Kalkhaltiges Bodenmaterial, wie Mergel.

4. Kalkmischungen mit organischen Düngern.

5. Basisch wirksame Dünger mit Kalkwirkung, wie Kalkstickstoff.

Zur Erhöhung des pH-Wertes im Boden um 1 soll ca. 300 g gemahlener Kalkstein per $m^2$ Boden verwendet werden, wobei die genauen Mengen aus bekannten Formeln jeweils nach Ermittlung des Boden-pH, des H-Wertes (Methode Schachtschabel) und dem pH-Ziel ermittelt werden. Bei anderen Mitteln mit alkalischer Wirkung wird eine Menge entsprechend ihrer jeweiligen Zusammensetzung verwendet.

Wenn Teile der vorgenannten Kalkverbindungen durch analoge Magnesiumverbindungen ersetzt werden, kommen vor allem in Betracht: Dolomitgestein, kohlensaurer Magnesiumkalk, Magnesiummmergel, Magensium-Branntkalk, Magnesium-Löschkalk.

Reiner Dolomit hat etwa 54 % $CaCO_3$ und 46 % $MgCO_3$, während Karbonate mit höherem Mg-Anteil etwa 55 - 85 % $CaCO_3$ und 5 - 40 % $MgCO_3$ enthalten. Kohlensaurer Magnesiumkalk hat ca. 60 - 80 % $CaCO_3$ und 15 - 40 % $MgCO_3$. Magnesiumbranntkalk besteht aus 50 - 80 % $CaO$ und 15 - 22 % $MgO$, Magnesium-Löschkalk hat einen Gehalt an $Mg(OH)_2$ berechnet als $MgO$ mit über 15 %. Alle die vorgenannten Calzium- und Magnesiumverbindungen sind für die erfindungsgemäßen Zwecke geeignet.

Weiters können auch alkalisch reagierende Verbindungen der Alkalien selbst, vornehmlich Kaliumverbindungen, wegen ihres Nährstoffcharakters eingesetzt werden. In Fällen, wo keine Natriumschädigung zu erwarten ist, können auch Natriumverbindungen eingesetzt werden. Es kommen hier vor allem das Kaliumkarbonat, Kaliumhydrogenkarbonat, aber auch Rückstandskali (z.B. Kalifilterstaub, enthaltend Kaliumkarbonat und -sulfat) sowie auch Kaliumdoppelsalze in Betracht. Bei den Natriumverbindungen werden analoge Salze eingesetzt und auch Naturprodukte wie Trona ($Na_2CO_3.NaHCO_3.2H_2O$). Weiters können vorteilhaft auch Ammoniumverbindungen wie Ammoniumbikarbonat und Ammoniumkarbonat Verwendung finden.

Als zweiter synergistisch wirkender Bestandteil des erfindungsgemäßen Mittels sind vor allem Pyrophosphate mit der Formel $P_2O_7{}^{-4}$ zu nennen. Viele Salze der Pyrophosphate mit mehrwertigen Kationen sind typischerweise vieltausendfach weniger wasserlöslich als die korrespondierenden Orthophosphatsalze. K. Simkiss von der englischen Universität Reading hat so in Schneckun größere Mengen von unlöslichen anorganischen Ablagerungen gefunden, welche Pyrophosphate enthielten. Es wurde davon abgeleitet, daß hiedurch eine Entgiftung bestimmter Schwermetalle im Körper eintritt. Tatsächlich sind Schwermetallpyrophospbate, wie z.B. $Pb_2P_2O_7$, in Wasser unlöslich. Dies gilt vor allem bei etwa neutralen Reaktionsbedingungen, während besonders beim Überschuß starker Säuren eine Löslichkeit wieder entstehen kann. Pyrophosphate sind bekanntlich Salze der Diphosphorsäure, welche durch längere Erhitzung von Phosphorsäure auf 200 - 300 °C unter Wasserabspaltung entsteht. Von den neutralen Pyro(-Di)-Phosphaten sind nur die Alkali- und Ammoniumsalze wasserlöslich. Die Diphosphate werden durch Erhitzen von primären oder sekundären Phosphaten bzw. der entsprechenden Ammoniumsalze gebildet. Diese Diphosphate bilden mit den Härtebildnern des Wassers Komplexverbindungen. Sie werden auch zur Unschädlichmachung verfärbender Eisenverbindungen im Waschwasser, zur Stabilisierung von Wasserstoffperoxidlösungen (durch Komplexierung katalytisch zersetzender Schwermetallionen) und vielen anderen technischen Zwecken verwendet. Neben Pyrophosphaten sind auch solche Polyphosphate für das erfindungsgemäße Mittel geeignet, welche eine Wasserunlöslichkeit ihrer Aluminium-und Schwermetallsalze in gleicher Größenordnung aufweisen.

Vorzugsweise werden die Kaliumverbindungen dieser Pyro-/Polyphosphate für vorliegenden Zweck verwendet, da dieses Kation durch den sauren Regen ebenfalls ausgewaschen wird und als Nährstoff regeneriert werden muß. Auch der Phosphorgehalt der vorgenannten Pyro-/Polyphosphate stellt ein wichtiges Düngeelement dar, welches zum Wachstum der Pflanzen benötigt wird. Es können auch weitere Nährstoffe zur Kräftigung des Pflanzenwuchses zugesetzt werden, wie insbesondere stickstoffhaltige Verbindungen (Ammonsalze, Harnstoff etc.).

Im folgenden werden typische Beispiele für erfindungsgemäße Mittel beschrieben:

Beispiel 1:

Folgende Zusammensetzung wird aufgetragen:

75 Gewichtsteile (GT) Düngekalk (vermahlenes $CaCO_3$-Gestein)
20 GT Harnstoff
5 GT Kaliumpyrophosphat ($K_4P_2O_7$)

Die Kalkzugabe kann vor der Zugabe der anderen Bestandteile obiger Zusammensetzung erfolgen oder gleichzeitig im fertigen Gemisch.

Die Zusammensetzung der erfindungsgemäßen Mittel kann und soll in breiten Grenzen variieren, je nach der jeweiligen Bodenbeschaffenheit bzw. Versäuerung, welche die entsprechenden Mengen basischer Stoffe bedingen. Die Bodenversäuerung ist sowohl durch analytische Feststellung solcher Proben als auch sehr einfach durch pH-Meter mit Bodenfühler, wie sie im Handel erhältlich sind, zu bestimmen.

Die Menge des Pyro-/Polyphosphates zur Bindung von Aluminium- und Schwermetallionen ist ebenfalls von der jeweiligen Konzentration dieser Schadstoffe im Boden abhängig.

Die überraschende synergistische Wirkung der vorgenannten basisch wirkenden Calzium-(Magnesium-)Verbindungen mit den Pyro-/Polyphosphaten, welche wasserunlösliche Aluminium- und Schwermetallsalze bilden, liegt einerseits darin, daß durch die Bindung der Bodenazidität eine Wiederauflösung der schädlich wirkenden mehrwertigen Salze verhindert wird. Andererseits scheint es zur Verhinderung der Giftwirkung auf Pflanzen und Bakterien durch Aluminium- und Schwermetallionen notwendig zu sein, daß diese in ihrer Wasserlöslichkeit weit unter die an und für sich geringe Löslichkeit ihrer Hydroxide und Orthophosphate reduziert werden. Durch den praktisch absoluten Entzug solch schädlicher Ionen im neutralen Bodenbereich wird die Entgiftung bewirkt und eine Stärkung des Pflanzenwuchses wieder ermöglicht.

Darüberhinaus übt auch die Fähigkeit der Polyphosphate zu peptisieren, entflocken und dispergieren eine positive Wirkung aus. Geringe Konzentrationen dieser stark geladenen Anionen werden von vielen Oberflächen fest adsorbiert und verleihen diesen abstoßende Ladungen.

Beispiel 2:

Ein wesentliches Einsatzgebiet für vorliegende erfindungsgemäße Mittel liegt auch in Schutzgebieten von Grundwasser. Die sauren Niederschläge entziehen dem Boden nicht nur wichtige Nährstoffe, sondern führen auch zur Auflösung von Schwermetall- und Aluminiumverbindungen, welche in das Grundwasser gelangen und dasselbe sowie in weiterer Folge fließende und stehende Oberflächengewässer vergiften. Hiedurch wird nicht nur das Leben von Wassertieren und -pflanzen gefährdet, sondern es werden auch Trinkwasserreservoire für den menschlichen Genuß geschädigt.

Gemäß Erfindung wird ein Mittel mit folgender Zusammensetzung auf den Boden aufgetragen:

98 GT Calziumcarbonat

2 GT Alkalidiphosphat

Mit dieser Bodendüngung wird die positive Filterwirkung des Bodens auch bei sauren Niederschlägen wiederhergestellt, und es ergibt sich ein Grundwasserzufluß, welcher frei von Aluminium- und Schwermetallionen ist.

Beispiel 3:

Folgendes Gemisch wird auf den Boden aufgetragen:

70 GT Düngekalk

27 GT Kaliumhydrogencarbonat

3 GT Kaliumpyrophosphat

Dieses Gemisch dient zur Regeneration von Bäumen entlang von Autostraßen und in Städten. Es wird durch diese Düngung sowohl die Entgiftung der Böden, welche große Mengen an Blei- und anderen Schwermetallverbindungen enthalten, eingeleitet als auch eine Nachdüngung der (durch die sauren Niederschläge) ausgewaschenen Calziumverbindungen errreicht. Untersuchungen haben gezeigt, daß bei derartigen Böden auch eine Kaliverarmung eintritt, welche gleichfalls durch obiges Gemisch wieder kompensiert wird. Auch hier kann die Kalkzugabe vor der Düngung mit den restlichen Bestandteilen erfolgen oder gleichzeitig als Dreiergemisch.

Kondensierte Phosphate (Poly-, Meta-, Ultraphosphate) wurden bisher als Düngemittel in der Praxis nicht verwendet, was vor allem durch die hohen Kosten bedingt ist. Lediglich mit Calziumionen lösliche Phosphate spielen eine Rolle in Nährlösungen für die Flüssigdüngung, da bei ihrer Verwendung in Stammlösungen kein Ca-Phosphat ausfällt.

Es liegt dabei somit eine gegensätzliche Wirkung als bei den erfindungsgemäß eingesetzten Diphosphaten vor.

Im Boden werden die kondensierten Phosphate normalerweise auch hydrolisiert, d.h. unter Wasseranlagerung wieder zu Orthophosphaten umgewandelt und in dieser Form von den Pflanzenwurzeln aufgenommen.

Lediglich die vorbeschriebenen Diphosphate, die eine vieltausendfach geringere Wasserlöslichkeit in Form ihrer Aluminium- und Schwermetallsalze aufweisen als in der Orthoform, behalten im nicht-sauren Bereich ihre Beständigkeit bzw. Resistenz gegen Hydrolisierung. Die erfindungsgemäße Kombination alkalisch reagierender Verbindungen mit Diphosphaten oder anderen Polyphosphaten, welche wasserunlösliche Aluminium- und Schwermetallsalze in analoger Größenordnung bilden, ist neu und steht sogar in direktem Gegensatz zur bisherigen etwaigen Anwendung von Polyphosphaten.

Soweit Spurennährelemente zuzuführen sind, welche insbesondere Schwermetallcharakter haben, empfiehlt es sich, eine Blattdüngung, d.h. ein Bespritzen der Blätter/Nadeln mit verdünnten Nährstofflösungen oder -suspensionen vorzunehmen, um Reaktionen im Boden (Fällung) mit vorliegenden kondensierten Phosphaten zu vermeiden. Normalerweise wird jedoch durch die Zuführung vorbeschriebener kondensierter Phosphate nur ein Überschuß von mehrwertigen wasserlöslichen Metallionen im Boden vermieden, wobei bekannt ist, daß selbst die Nährelemente Eisen und Mangan bei höheren Konzentrationen in wasserlöslicher Form toxische Wirkungen auf den Pflanzenwuchs ausüben und daher auf ein natürliches Maß zurückgeführt werden soll, was durch die erfindungsgemäße Kombination durch Zugabe der jeweils entsprechenden Mengen ebenfalls erreicht wird.

Als Beispiele für vorteilhafte erfindungsgemäße Düngemittel mit einem Gehalt an Ammoniumverbindungen seien genannt:

Beispiel 4:

88 GT Ammoniumbikarbonat

10 GT Ammoniumpyrophosphat

2 GT komplexierte Metallverbindungen (Mg, Fe, Cu, Zn, Co)

Beispiel 5:

57 GT Gemisch Ammoniumkarbonat/Ammoniumbikarbonat

13 GT Kaliumpolyphosphat

2,5 GT komplexierte Metallverbindungen 1t. Beispiel 4 sowie Ammonmolybdat und Borax

27,5 GT thermisch behandeltes Lavagesteinsmehl (Auflockerungsmittel)

Beispiel 6:

47 GT Dolomitmehl mit durchschnittlicher Teil-

chengröße von 10 μm

33 GT Ammoniumbikarbonat

12 GT Kaliumpyrophosphat

2 GT Spurenelemente

6 GT Kaliumsulfat

Die Aufbringung auf den Boden erfolgt in solcher Weise, daß das Dolomitmehl im Herbst und die übrigen Bestandteile im nachfolgenden Frühjahr gestreut bzw. versprüht werden.

## Ansprüche

1. Mittel zur Bindung von Säuren, Aluminium und Schwermettallen in insbesondere durch saure Niederschläge geschädigten Böden und gegebenenfalls zu deren Düngung, wobei das Mittel alkalisch reagierende Calzium-und/oder Magnesium- und/oder Kalium- bzw. Natriumverbindungen und/oder Ammoniumverbindungen enthält, und das Mittel wasserlösliche Pyrophosphate (= Diphosphate) oder andere Polyphosphate, welche wasserunlösliche Aluminium- und Schwermetallsalze bilden, und gegebenenfalls weitere Nährstoffe enthält, dadurch gekennzeichnet, daß das Gewichtsverhältnis der alkalisch reagierenden Verbindungen zum Pyrophosphat oder den Polyphosphaten wenigstens 57:13 ist.

2. Mittel nach Anspruch 1, dadurch gekennzeichnet, daß das eingesetzte Diphosphat Kaliumpyrophosphat ($K_4P_2O_7$) ist.

3. Mittel nach einem der Ansprüche 1 oder 2, dadurch gekennzeichnet, daß als weiterer Nährstoff in an sich bekannter Weise Harnstoff enthalten ist.

4. Verfahren zur Bindung von Säuren, Aluminium und Sohwermetallen in Böden unter Verwendung eines Mittels nach einem der vorhergehenden Ansprüche 1 bis 3, dadurch gekennzeichnet, daß auf den Boden zumindest eine alkalisch reagierende Calzium- und/oder Magnesium- und/oder Kalium-bzw. Natriumverbindung und/oder Ammoniumverbindung und zumindest ein wasserlösliches Pyrophosphat, insbesondere Kaliumpyrophosphat und/oder Polyphosphat, welches wasserunlösliche Aluminium- oder Schwermetallsalze bildet, sowie gegebenenfalls weitere Nährstoffe aufgetragen werden, wobei das Gewichtsverhältnis der alkalisch reagierenden Verbindungen zum Pyrophosphat oder den Polyphosphaten wenigstens 57:13 ist.

## Claims

1. Agent for binding acids, aluminium and heavy metals in soils damaged in particular by acid rains and optionally for fertilising said soils, the agent comprising alkaline-reacting calcium compounds and/or magnesium compounds and/or potassium or sodium compounds and/or ammonium compounds, and the agent comprising water-soluble pyrophosphates (diophosphates) or other polyphosphates, which form water-insoluble aluminium salts and heavy metal salts, and optionally comprising further nutrients, characterised in that the ratio by weight of the alkaline-reacting compounds to the pyrophosphate or pyrophosphates is at least 57:13.

2. Agent according to claim 1, characterised in that the diophosphate used is potassium pyrophosphate ($K_4P_2O_7$).

3. Agent according to one of claims 1 or 2, characterised in that as a further nutrient, urea is added in a known manner.

4. Method of binding acids, aluminium and heavy metals in soils using an agent according to one of the preceding claims 1 to 3, characterised in that at least one alkaline-reacting calcium compounds and/or magnesium compounds and/or potassium or sodium compounds and/or ammonium compounds, and at least one water-soluble pyrophosphate, in particular potassium pyrophosphate, and or polyphosphate, which forms water-insoluble aluminium salts or heavy metal salts, and optionally comprising further nutrients, are applied to the soil, the ratio by weight of the alkaline-reacting compounds to the pyrophosphate or polyphosphates being at least 57:13.

## Revendications

1. Agent pour la fixation des acides, de l'aluminium et des métaux lourds dans, en particulier, les sols pollués par des précipitations acides et éventuellement pour la fertilisation desdits sols, ledit agent contenant des dérivés de calcium et/ou de magnésium et/ou de potassium ou de sodium et/ou des dérivés ammonium à réaction alcaline, et ledit agent contenant des pyrophosphates (= diphosphates) ou d'autres polyphosphates solubles dans l'eau, qui forment des sels d'aluminium et de métal lourd insolubles dans l'eau, et éventuellement d'autres produits nutritifs, caractérisé en ce que le rapport en poids des dérivés à réaction alcaline au pyrophosphate ou aux polyphosphates est d'au moins 57:13.

2. Agent selon la revendication 1, caractérisé en ce que le diphosphate utilisé est le pyrophosphate de potassium ($K_4P_2O_7$).

3. Agent selon l'une quelconque des revendications 1 et 2, caractérisé en ce qu'il contient, comme autre produit nutritif, de manière connue en soi, de l'urée.

4. Procédé pour la fixation des acides, de l'aluminium et des métaux lourds dans les sols par utilisation d'un agent selon l'une quelconque des revendications précédentes 1 à 3, caractérisé en ce que l'on applique sur le sol au moins un dérivé de calcium et/ou de magnésium et/ou de potassium ou de sodium et/ou un dérivé ammonium à réaction alcaline et au moins un pyrophosphate, en particulier le pyrophosphate de potassium, et/ou un polyphosphate soluble dans l'eau, qui forme des sels d'aluminium ou de métal lourd insolubles dans l'eau, ainsi qu'éventuellement d'autres produits nutritifs, le rapport en poids des dérivés à réaction alcaline au pyrophosphate ou aux polyphosphates étant d'au moins 57:13.